# EUROPÄISCHE PATENTSCHRIFT

(11) **EP 1 468 360 B1**
(45) Veröffentlichungstag und Bekanntmachung des Hinweises auf die Patenterteilung: **17.05.2006**
(21) Anmeldenummer: 03731701.3
(22) Anmeldetag: 22.01.2003
(51) Int. Cl.: G06F 11/00

(54) **VERFAHREN UND VORRICHTUNG ZUR STEUERUNG DES ZUGRIFFS AUF EINE DATENVERARBEITUNGSEINRICHTUNG**
METHODS AND DEVICES FOR CONTROLLING THE ACCESS TO A DATA PROCESSING DEVICE
PROCEDES ET DISPOSITIFS DE COMMANDE DE L'ACCES A UN SYSTEME DE TRAITEMENT DE DONNEES

(30) Priorität: 22.01.2002 DE 10202302
(43) Veröffentlichungstag der Anmeldung: 20.10.2004
(73) Patentinhaber: Fraunhofer-Gesellschaft zur Förderung der angewandten Forschung e.V., 80636 München (DE)
(72) Erfinder: ZIMMERMANN, Heiko, 66113 Saarbrücken (DE); FUHR, Günter, R., 13187 Berlin (DE); HAGEDORN, Rolf, 13057 Berlin (DE)
(74) Vertreter: Hertz, Oliver
(86) Internationale Anmeldenummer: PCT/EP2003/000614
(87) Internationale Veröffentlichungsnummer: WO 2003/062997

(56) Entgegenhaltungen:
- DE-A- 19 915 098
- US-A- 5 687 149
- ANONYMOUS: "Read Write Memories with Read Only Function at Low Operating Temperature. December 1978." IBM TECHNICAL DISCLOSURE BULLETIN, Bd. 21, Nr. 7, 1. Dezember 1978 (1978-12-01), Seiten 2827-2830, XP002256675 New York, US

## Beschreibung

Die Erfindung betrifft Verfahren zur Steuerung des Zugriffs auf eine Datenverarbeitungseinrichtung mit einer Zugriffsfilterschaltung, insbesondere Verfahren zur Steuerung des Zugriffs auf elektronische Datenspeicher, wie zum Beispiel Verfahren zum physikalischen Zugriffsschutz von Datenspeichern, und Vorrichtungen zur Umsetzung derartiger Verfahren.

Mit dem wachsenden Einsatz der elektronischen Datenverarbeitung in der Industrie, Wissenschaft, Verwaltung und im Haushaltsbereich wächst der Bedarf nach einem sicheren Schutz von Datenverarbeitungseinrichtungen und insbesondere Datenspeichern. Der Schutz soll sich einerseits auf die Verhinderung eines unautorisierten Zugriffs auf gespeicherte Daten richten. Andererseits soll mit einem Zugriffsschutz auch ein unbeabsichtigtes Verändern gespeicherter Daten verhindert werden. Entsprechendes gilt auch für den Schutz von Datenverarbeitungseinrichtungen oder Steuereinrichtungen für technische Anlagen.

Der Zugriffsschutz kann programmbezogen erfolgen (Softwareschutz). Beispielsweise wird ein Datenzugriff an einen Passwortschutz oder ein Schutzprogramm (sogenannte Firewall) gebunden. Alternativ ist auch ein physikalischer Schutz möglich, indem der Übertragungskanal, über den der Zugriff beispielsweise auf einen Datenspeicher erfolgen würde, getrennt wird. Durch Trennung eines Rechners von einem Datennetz wird sicher jeder Zugriff auf den abgetrennten Rechner unterbunden.

Die herkömmlichen Techniken zum Zugriffsschutz für Datenverarbeitungseinrichtungen und insbesondere Datenspeicher sind zwar gut entwickelt und weit verbreitet. Sie besitzen jedoch auch eine Reihe von Nachteilen, die sich insbesondere in ihrer verminderten Sicherheit oder einer aufwendigen Handhabung äußern. So ist die Einrichtung eines Softwareschutzes immer mit Risiken verbunden. Mit der aktuellen Technik kann ein Eindringen unbefugter Nutzer in Computernetzwerke nur behindert, aber nicht sicher ausgeschlossen werden. Der physikalische Schutz hingegen erfordert Maßnahmen zur betriebssicheren Trennung und Verbindung eines Rechners in einem Netzwerk.

Es gibt Anwendungen von Datenverarbeitungseinrichtungen in der Technik, bei denen an die Sicherheit der Zugriffssteuerung besonders hohe Anforderungen gestellt werden, wie sie nur mit einem physikalischen Schutz erreichbar sind. Die jeweilige Datenverarbeitungseinrichtung ist jedoch gegebenenfalls aufgrund der Betriebsbedingungen für einen herkömmlichen physikalischen Zugriffsschutz unzugänglich. Dies gilt beispielsweise für die Verwendung von elektronischen Steuerungen oder Datenspeichern in Arbeitsverfahren oder anderen Prozeduren, die unter extremen Umgebungsbedingungen durchgeführt werden.

In US 6 009 033 wird ein Verfahren zur Erhöhung der Betriebssicherheit eines EEPROM-Speichers beschrieben. Zur Vermeidung von Datenfehlern wird vorgeschlagen, Programmier- und Löschvorgänge bei einer erhöhten Betriebstemperatur des Speichers durchzuführen, um unerwünschte Aufladungserscheinungen im Speicher zu vermeiden und damit die Langzeitzuverlässigkeit des Speichers zu erhöhen. Ein physikalischer Zugriffsschutz für die oben genannten Anforderungen ist mit dieser Technik nicht erzielbar.

Die Aufgabe der Erfindung ist es, verbesserte Verfahren zur Steuerung des Zugriffs auf Datenverarbeitungseinrichtungen, insbesondere elektronische Datenspeicher bereitzustellen, mit denen die Nachteile herkömmlicher Verfahren überwunden werden und die insbesondere eine hohe Zugriffssicherheit bei guter Handhabbarkeit ermöglichen. Die Aufgabe der Erfindung ist es auch, Vorrichtungen zur Umsetzung derartiger Verfahren bereitzustellen.

Diese Aufgaben werden durch Verfahren und Vorrichtungen mit den Merkmalen gemäß den Patentansprüchen 1 und 10 gelöst. Vorteilhafte Ausführungsformen der Erfindung ergeben sich aus den abhängigen Ansprüchen.

Die Grundidee der Erfindung ist es, eine physikalische Zugriffssteuerung für Datenverarbeitungseinrichtungen, insbesondere elektronische Datenspeicher zu realisieren, bei der ein freier oder beschränkter Zugriff auf die Datenverarbeitungseinrichtung mit oder über eine Zugriffsfilterschaltung in Abhängigkeit von deren Betriebstemperatur vorgesehen ist. Bei einer Normalbetrieb-Temperatur, z. B. bei Raumtemperatur, ist der volle Zugriff über die Zugriffsfilterschaltung auf die Datenverarbeitungseinrichtung gewährleistet. Sie befindet sich in einem Lese-/Schreib-Modus. Bei einer reduzierten Zugriffsschutz-Temperatur ist ein Zugriff auf die Datenverarbeitungseinrichtung nur beschränkt möglich. Die Erfinder haben erstmalig festgestellt, dass bei Reduzierung der Betriebstemperatur einer Zugriffsfilterschaltung, zum Beispiel eines Datenspeichers oder eines Teils von diesem zunächst die Funktion der Zugriffsfilterschaltung und insbesondere die Zugriffsgeschwindigkeit vollständig erhalten bleiben, bis unterhalb einer Grenztemperatur zumindest der Schreibzugriff ausgeschlossen wird. Vorteilhafterweise wird mit nur einem Betriebsparameter, nämlich der Temperatur eine reproduzierbare physikalische Zugriffskontrolle erzielt. Diese ist im Unterschied zum herkömmlichen physikalischen Zugriffsschutz vereinfacht handhabbar und automatisierbar.

Gemäß einer ersten bevorzugten Ausführungsform der Erfindung wird die Zugriffsfilterschaltung bei einer Schreibschutz-Temperatur betrieben, bei der sich die Zugriffsfilterschaltung in einem Nur-Lese-Modus befindet. Daten in der Datenverarbeitungseinrichtung können gelesen werden. In diesem Modus ist jedoch ein Löschen oder Einschreiben von Daten ausgeschlossen. Gemäß einer weiteren bevorzugten Ausführungsform wird die Zugriffsfilterschaltung bei einer Schreib/Leseschutz-Temperatur betrieben, bei der sie sich in einem vollständig gesperrten Zustand befindet. Sowohl das Lesen als auch das Schreiben von Daten ist ausgeschlossen. Vorteilhafterweise ist der physikalische Schutz somit für verschiedene Funktionen der Zugriffsfilterschaltung oder der mit dieser verbundenen Datenverarbeitungseinrichtung oder anderweitigen technischen Einrichtungen je nach der konkreten Aufgabenstellung einstellbar.

Vorteilhafterweise erfolgt die Reduzierung der Betriebstemperatur mit einem Kühlmittel, wie z. B. flüssigem Stickstoff oder Dampf des flüssigen Stickstoffs, oder mit einem elektrischen Kühlgerät, wie z. B. einem Peltier-Element. Im ersten Fall ergeben sich besondere Vorteile für die Sicherheit der Zugriffssteuerung. Solange sich die Zugriffsfilterschaltung in Kontakt mit dem Kühlmittel befindet, kann ein unerwünschter Datenzugriff ausgeschlossen werden. Weitere Vorteile ergeben sich, wenn das erfindungsgemäße Verfahren in Zusammenhang mit einem technischen Prozess benutzt wird, bei dem das Kühlmittel auch andere Funktionen übernimmt, wie beispielsweise bei der Kryokonservierung oder -lagerung. Die Kühlung mit einem Peltier-Element besitzt den Vorteil einer weiter vereinfachten Handhabbarkeit des Verfahrens.

Gemäß einer weiteren vorteilhaften Ausführungsform des erfindungsgemäßen Verfahrens wird ein Datenspeicher selbst als Zugriffsfilter oder Zugriffsfilterschaltung für eine weitere technische Einrichtung, wie z. B. die Datenverarbeitungseinrichtung oder einen weiterer Speicher, verwendet. Obwohl der physikalische Zugriffsschutz nur an dem Datenspeicher realisiert wird, der den Zugriffsfilter bildet, können größere technische Anlagen vor unbeabsichtigtem Zugriff geschützt werden.

Ein Gegenstand der Erfindung ist auch eine Vorrichtung zur Steuerung des Zugriffs auf eine Datenverarbeitungseinrichtung, die insbesondere zur Umsetzung des erfindungsgemäßen Verfahrens eingerichtet ist. Die Schutzvorrichtung enthält mindestens eine Zugriffsfilterschaltung und insbesondere eine Kühleinrichtung, die beispielsweise ein Kühlmittelbad oder ein Peltier-Element umfasst.

Die Erfindung besitzt die folgenden weiteren Vorteile. Zur verbesserten Zugriffssteuerung können an sich verfügbare Kryotechniken verwendet werden. Die Zugriffssteuerung kann mit geringem Aufwand in bestehende Systeme implementiert werden. Die Erfindung ist allgemein zur Funktionssicherung von Halbleiterbauelementen verwendbar. Zum Zugriffsschutz eines Datenspeichers muss nicht zwingend der gesamte Datenspeicher gekühlt werden. Bauformabhängig genügt erfindungsgemäß die Einstellung der Zugriffsschutz-Temperatur an einem Teil des Datenspeichers, z. B. einem Controller-Kreis oder dgl.

Die Erfindung liefert eine sichere, unabhängige und autonom realisierbare Zugriffskontrolle ohne mechanische Elemente für einen Massenspeicher. Ein physikalischer Zugriffsschutz ohne bewegliche mechanische Bauteile besitzt den grundsätzlichen Vorteil, dass keine Verminderung der Lebensdauer durch Abnutzung oder Korrosion auftreten kann. Der Zugriffsschutz beim Betrieb insbesondere unterhalb der Schreib/Leseschutz-Temperatur ist so sicher wie der Zugriffsschutz durch physikalische Trennung. Im Bereich der Kryokonservierung, insbesondere von biologischen Proben, bei der die Proben jeweils mit einem Datenspeicher gelagert werden, ergibt sich der Zugriffsschutz automatisch beim Einfrieren der Probe.

Weitere Vorteile und Einzelheiten der Erfindung werden im folgenden unter Bezug auf die beigefügten Zeichnungen beschrieben. Es zeigen:
- Fig. 1:: schematische Illustrationen des erfindungsgemäßen Verfahrens, und
- Fig. 2 - 4:: schematische Illustrationen verschiedener Ausführungsformen erfindungsgemäßer Vorrichtungen.

Die erfindungsgemäße Zugriffssteuerung basiert auf den folgenden Prinzipien. Elektronische Halbleiterbauelemente sind in der Regel für einen Normalbetrieb innerhalb eines bestimmten Temperaturbereiches getestet und zertifiziert. Der Temperaturbereich umfasst in der Regel ein Intervall von einer oberen Grenztemperatur oberhalb der Raumtemperatur bis zu einer unteren Grenztemperatur von rund -40°C bis -60°C. Wird das Bauelement bei einer Temperatur (Normalbetrieb-Temperatur) innerhalb dieses Temperaturbereichs betrieben, so ist seine Funktion vollständig gewährleistet. Beispielsweise sind Datenspeicher lesbar und beschreibbar, sie befinden sich im Lese-Schreib-Modus. Wird eine Temperatur unterhalb des zertifizierten Temperaturbereichs des Normalbetriebs eingestellt (Zugriffsschutz-Temperatur) wird die Funktion des Bauelements zumindest teilweise behindert oder gesperrt. Ein besonderer Vorteil der Erfindung besteht darin, dass dieser Funktionsausfall unterhalb der unteren Grenztemperatur sich nur auf die Leitungsvorgänge im Bauelement bezieht, nicht jedoch auf die Fähigkeit, Daten zu speichern. Des Weiteren ist dieser Funktionsausfall reversibel. Wird das Bauelement, insbesondere der Datenspeicher wieder auf eine Normalbetrieb-Temperatur erwärmt, so ist die Schreib-Lese-Fähigkeit wieder gegeben und die gespeicherten Daten sind verfügbar. Vorteilhafterweise ist dieses Umschalten zwischen freiem und beschränktem Zugriff beliebig oft wiederholbar.

Zur Zugriffskontrolle kann zwischen dem Schreib-Lese-Modus und einem Nur-Lese-Modus oder einer vollständigen Zugangssperre umgeschaltet werden. Wird als Zugriffsschutz-Temperatur beispielsweise eine Schreibschutz-Temperatur gewählt, bei der sich der Speicher im Nur-Lese-Modus befindet, können Daten zwar gelesen, nicht jedoch geschrieben werden. Durch weitere Abkühlung bis zu einer Schreib/Leseschutz-Temperatur wird auch das Lesen von Daten unterbunden.

Die Erfindung wird im folgenden beispielhaft unter Bezug auf eine bevorzugte Ausführungsform beschrieben, bei der die Zugriffsfilterschaltung durch einen Datenspeicher oder einen Teil von diesem, zum Beispiel einen Zwischenspeicher, wie einen CACHE-Speicher (zum Beispiel aus RAM) gebildet wird. Die Umsetzung Erfindung ist jedoch nicht auf dieses Beispiel beschränkt, sondern auch bei anderen Arten von Datenverarbeitungseinrichtungen mit einer integrierten oder einer zusätzlichen Zugriffsfilterschaltung realisierbar.

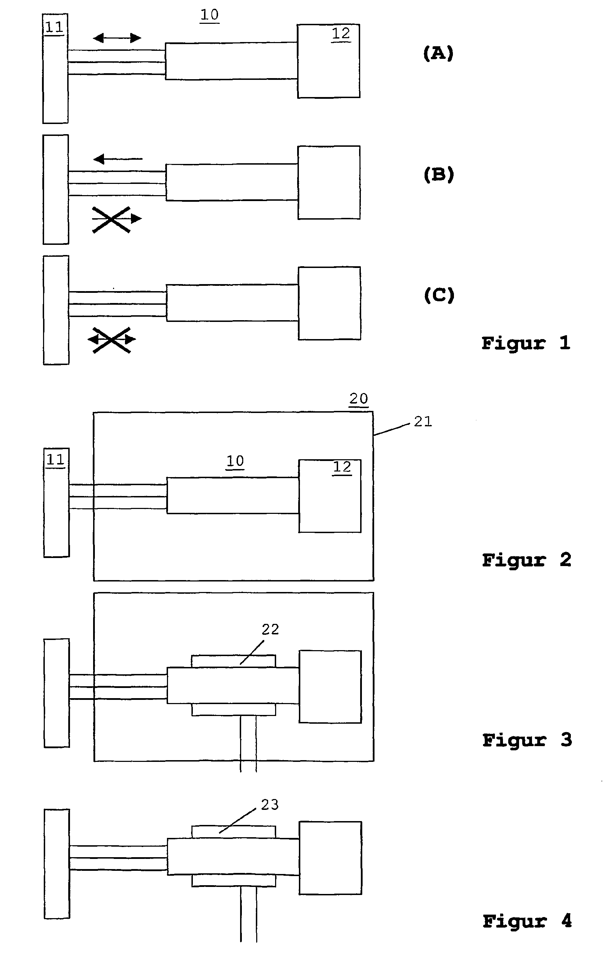

In Fig. 1 sind die verschiedenen Zustände des Zugriffs auf einen Datenspeicher 10 schematisch illustriert. Der Datenspeicher 10 ist einerseits über eine Busverbindung mit einer Schnittstelle 11 und andererseits mit einer nachgeordneten Datenverarbeitungseinrichtung oder anderweitigen technischen Einrichtung 12 verbunden. Der Datenspeicher 10 ist beispielsweise ein EEPROM oder ein FLASH-Speicher, jeweils gegebenenfalls mit Zusatzeinrichtungen, wie z. B. Controller-Schaltungen oder dgl. Bei Normalbetriebstemperatur gemäß Fig. 1A ist der vollständige Zugriff auf den Datenspeicher 10 gewährleistet (siehe Doppelpfeil). Bei einer Schreibschutz-Temperatur des Datenspeichers (10) oder eines Teils von diesem (z. B. Controller-Schaltung) gemäß Fig. 1B ist nur das Lesen von Daten und nicht das Schreiben oder Löschen von Daten möglich. Vorteilhafterweise kann das Auslesen der Daten fehlerfrei mit nahezu unveränderter Zugriffszeit erfolgen.

Schließlich ist bei einer Schreib/Leseschutz-Temperatur gemäß Fig. 1C weder ein Lesen noch ein Beschreiben des Datenspeichers 10 möglich. Es besteht vollständiger physikalischer Zugriffsschutz.

Die Normalbetrieb-, Schreibschutz- und Schreib/Leseschutz-Temperaturen werden je nach den technischen Parametern des Datenspeichers 10 eingestellt. Die Normalbetrieb-Temperatur liegt beispielsweise oberhalb von -60°C. Die Schreibschutz-Temperatur ist beispielsweise im Bereich von -60°C bis -120°C, vorzugsweise im Bereich von -70°C bis -100°C gewählt. Der vollständige Zugriffsschutz besteht bei Temperaturen unterhalb von beispielsweise -120°C.

Anstelle des Datenspeichers 10 kann erfindungsgemäß auch ein anderes Halbleiterbauelement, z. B. ein hierfür speziell entworfener Schaltkreis vorgesehen sein, das unterhalb der jeweiligen Grenztemperaturen einen Teil seiner Funktion verliert oder ändert. Der Datenspeicher 10 oder das entsprechende Halbleiterbauelement kann einen Zugriffsfilter für den Zugriff auf die nachgeordnete Einrichtung 12 bilden, die gegebenenfalls bei Raumtemperatur betrieben wird.

Die Figuren 2 bis 4 illustrieren verschiedene Ausführungsformen erfindungsgemäßer Vorrichtungen, die zur Zugriffssteuerung auf elektronische Datenspeicher eingerichtet sind. Erfindungsgemäße Vorrichtungen zeichnen sich insbesondere durch eine Kühleinrichtung 20 aus, die gemäß den Figuren 2 und 3 durch einen Kühlmittelbehälter 21 gebildet wird. Im Kühlmittelbehälter 21 ist zumindest der Datenspeicher 10 oder ein Teil von diesem angeordnet. Je nach Anwendungsfall befindet sich auch die nachgeordnete Einrichtung 12 im Kühlbehälter 21. Der Kühlbehälter 21 enthält ein flüssiges Kühlmittel (z. B. flüssigen Stickstoff). Der Datenspeicher 10 ist zumindest teilweise mit dem Kühlmittel in Kontakt oder in einem Dampf des Kühlmittels angeordnet. Die Temperatureinstellung mit flüssigen Kühlmitteln ist an sich aus der Kryotechnik bekannt, so dass hier die Temperatureinstellung am Datenspeicher 10 nicht mit weiteren Einzelheiten erläutert wird.

Gemäß einer abgewandelten Ausführungsform kann gemäß Fig. 3 am Datenspeicher 10 auch eine Heizeinrichtung 22 vorgesehen sein, mit der der Datenspeicher 10 lokal von einer reduzierten Temperatur zur Normalbetriebs-Temperatur überführt werden kann. Dies ist von besonderem Vorteil, wenn im Kühlbehälter 21 eine Vielzahl von Datenspeichern 10 angeordnet ist, wie es beispielsweise bei der Kryospeicherung biologischer Proben vorkommt. Die Heizeinrichtung 22 ist eine Widerstandsheizung, die von außen betätigbar ist, um den Zugriff auf einen bestimmten Datenspeicher teilweise oder vollständig freizugeben, ohne dass die übrigen Datenspeicher beeinflusst werden.

Die Kühleinrichtung der erfindungsgemäßen Vorrichtung kann auch durch ein Peltier-Element 23 gemäß Fig. 4 gebildet werden. Das Peltier-Element ist in engem thermischen Kontakt mit dem Datenspeicher 10 angeordnet. Die Zugriffssteuerung erfolgt durch Einstellung der gewünschten Temperatur mit dem Peltier-Element. Es kann auch eine Kombination aus einem Peltier-Element und einer Heizeinrichtung vorgesehen sein.

Eine weitere Anwendung der Erfindung ist bei der folgenden Gestaltung einer automatisierten Kryobank mit mindestens einem Kryobehälter gegeben. Der Kryobehälter enthält eine Vielzahl biologischer Proben jeweils in Verbindung mit einem Datenspeicher. Wenn die Proben-Datenspeicher-Kombinationen oder mehrere Kryobehälter wie ein Netzwerk mit einer zentralen Steuerung verbunden sind, liefert die Erfindung eine 'Firewall', mit der ein unerwünschter Zugriff auf einzelne Datenspeicher oder den ganzen Kryobehälter unterbunden werden kann. Der Kryobehälter enthält am Boden beispielsweise flüssigen Stickstoff, in dessen Dampf oberhalb des Bodens die Proben angeordnet sind. Oberhalb des Bodens bildet sich ein thermischer Gradient, mit zunehmender Höhe über dem Boden steigt die Temperatur. Erfindungsgemäß kann eine als Zugriffsfilter wirkende Schaltung oder eine Probe-Datenspeicher-Kombination mit einer mechanischen Einrichtung (zum Beispiel Seilzug) im Kryobehälter auf Höhen bewegt werden, in denen die jeweilige Temperatur ein Lesen oder ein Lesen und Schreiben von Daten ermöglicht. Die mechanische Einrichtung dient der bei Bedarf gewünschten Erhöhung der Temperatur. Der Kryobehälter wird hierbei selbst als Kühleinrichtung zur Steuerung des Zugriffs auf die Datenverarbeitungseinrichtung (Probendatenspeicher) verwendet.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Steuerung des Zugriffs auf eine Datenverarbeitungseinrichtung mit einer Zugriffsfilterschaltung (10), wobei
- die Zugriffsfilterschaltung (10) mit freigegebenem Zugriff bei einer Normalbetrieb-Temperatur in einem Lese-Schreib-Modus und mit beschränktem Zugriff bei einer Zugriffsschutz-Temperatur betrieben wird, die geringer als die Normalbetrieb-Temperatur ist,
**dadurch gekennzeichnet, dass**
- die Zugriffsschutz-Temperatur durch eine Reduzierung einer Betriebstemperatur der Zugriffsfilterschaltung eingestellt wird.

2. Verfahren gemäß Anspruch 1, bei dem als Zugriffsschutz-Temperatur eine Schreibschutz-Temperatur gewählt wird, bei der die Zugriffsfilterschaltung (10) in einem Nur-Lese-Modus betrieben wird.

3. Verfahren gemäß Anspruch 1 oder 2, bei dem als Zugriffschutz-Temperatur eine Schreib-Lese-Schutz-Temperatur gewählt wird, bei der ein Zugriff auf die Zugriffsfilterschaltung (10) vollständig unterbunden ist.

4. Verfahren gemäß einem der vorhergehenden Ansprüche, bei dem die Zugriffsschutz-Temperatur mit einem Kühlmittel, insbesondere flüssigem Stickstoff oder Dampf des flüssigen Stickstoffs eingestellt wird.

5. Verfahren gemäß einem der vorhergehenden Ansprüche 1 bis 3, bei dem die Zugriffsschutz-Temperatur mit einem Peltier-Element (23) eingestellt wird.

6. Verfahren gemäß einem der vorhergehenden Ansprüche, bei dem die Temperatur der Zugriffsfilterschaltung (10) zum Übergang in den Lese-Schreib-Modus mit einer Heizeinrichtung (22) erhöht wird.

7. Verfahren gemäß einem der vorhergehenden Ansprüche, bei dem als Zugriffsfilterschaltung ein Datenspeicher (10) oder ein Teil eines Datenspeichers verwendet wird.

8. Verfahren gemäß einem der vorhergehenden Ansprüche, bei dem die Zugriffsfilterschaltung ein Teil der Datenverarbeitungseinrichtung ist oder diese bildet.

9. Verfahren gemäß einem der vorhergehenden Ansprüche 7 oder 8, bei dem die Zugriffsschutz-Temperatur mit einer Kühleinrichtung (20) an einem Teil des Datenspeichers (10) eingestellt wird.

10. Vorrichtung zur Steuerung des Zugriffs auf eine Datenverarbeitungseinrichtung mit einer Zugriffsfilterschaltung (10), wobei
die Zugriffsfilterschaltung (10) dazu eingerichtet ist, mit freigegebenem Zugriff bei einer Normalbetrieb-Temperatur in einem Lese-Schreib-Modus und mit beschränktem Zugriff bei einer Zugriffsschutz-Temperatur betrieben zu werden, die geringer als die Normalbetrieb-Temperatur ist, **dadurch gekennzeichnet, dass** eine Kühleinrichtung (20) vorgesehen ist, die zur Einstellung der Zugriffsschutz-Temperatur eingerichtet ist.

11. Vorrichtung gemäß Anspruch 10, bei der die Kühleinrichtung (20) einen Kühlbehälter (21) und/oder ein Peltier-Element (23) umfasst.

12. Vorrichtung gemäß Anspruch 10 oder 11, bei der an der Zugriffsfilterschaltung (10) eine Heizeinrichtung (22) vorgesehen ist.

13. Vorrichtung gemäß einem der vorhergehenden Ansprüche 10 bis 12, bei der die Zugriffsfilterschaltung einen Datenspeicher (10) oder einen Teil eines Datenspeichers (10) umfasst.

14. Vorrichtung gemäß einem der vorhergehenden Ansprüche 10 bis 12, bei der die Datenverarbeitungseinrichtung einen Datenspeicher (10) umfasst, wobei die Zugriffsfilterschaltung durch den Datenspeicher (10) oder einen Teil eines Datenspeichers (10) gebildet wird.

15. Verwendung einer Vorrichtung gemäß Anspruch 10 zur Steuerung des Zugriffs auf eine Datenverarbeitungseinrichtung, insbesondere bei der Kryokonservierung biologischer Proben.

## Claims

1. Method for controlling access to a data processing device, having an access filter circuit (10),
- the access filter circuit (10) being operated with free access at a normal operating temperature in a read-write mode and with restricted access at an access protection temperature which is lower than the normal operating temperature,
**characterised in that**
- the access protection temperature is adjusted by means of a reduction in an operating temperature of the access filter circuit.

2. Method according to claim 1, in which a write protection temperature is chosen as access protection temperature at which the access filter circuit (10) is operated in a read-only mode.

3. Method according to claim 1 or 2, in which a read-write protection temperature is chosen as access protection temperature at which access to the access filter circuit (10) is completely prevented.

4. Method according to one of the preceding claims, in which the access protection temperature is adjusted with a cooling means, in particular liquid nitrogen or vapour of the liquid nitrogen.

5. Method according to one of the preceding claims 1 to 3, in which the access protection temperature is adjusted with a Peltier element (23).

6. Method according to one of the preceding claims, in which the temperature of the access filter circuit (10) is increased with a heating device (22) for transfer into the read-write mode.

7. Method according to one of the preceding claims, in which a memory (10) or a part of a memory is used as access filter circuit.

8. Method according to one of the preceding claims, in which the access filter circuit is a part of the data processing device or forms the latter.

9. Method according to one of the preceding claims 7 or 8, in which the access protection temperature is adjusted with a cooling device (20) on one part of the memory (10).

10. Device for controlling access to a data processing device, having an access filter circuit (10),
the access filter circuit (10) being equipped to be operated with free access at a normal operating temperature in a read-write mode and with restricted access at an access protection temperature which is lower than the normal operating temperature,
**characterised in that** a cooling device (20) is provided which is equipped to adjust the access protection temperature.

11. Device according to claim 10, in which the cooling device (20) comprises a cooling container (21) and/or a Peltier element (23).

12. Device according to claim 10 or 11, in which a heating device (22) is provided on the access filter circuit (10).

13. Device according to one of the preceding claims 10 to 12, in which the access filter circuit comprises a memory (10) or a part of a memory (10).

14. Device according to one of the preceding claims 10 to 12, in which the data processing device comprises a memory (10), the access filter circuit being formed by the memory (10) or a part of the memory (10).

15. Use of a device according to claim 10 for controlling access to a data processing device, in particular for cryo-preservation of biological samples.

## Revendications

1. Procédé pour commander l'accès à un dispositif de traitement de données avec un circuit de filtrage d'accès (10), moyennant quoi
- le circuit de filtrage d'accès (10) fonctionne avec accès autorisé à température de fonctionnement normal en mode lecture-écriture et avec accès limité à une température de protection d'accès, qui est une température inférieure à la température de fonctionnement normal,
**caractérisé en ce que**
- la température de protection d'accès est réglée par une réduction d'une température de fonctionnement du circuit de filtrage d'accès.

2. Procédé selon la revendication 1, dans lequel est choisie comme température de protection d'accès une température de protection lecture-écriture, à laquelle le circuit de filtrage d'accès (10) fonctionne dans un mode de lecture seule.

3. Procédé selon la revendication 1 ou 2, dans lequel est choisie comme température de protection d'accès une température de protection lecture-écriture, à laquelle un accès au circuit de filtrage d'accès (10) est totalement interdit.

4. Procédé selon l'une des revendications précédentes, dans lequel la température de protection d'accès est réglée avec un moyen de refroidissement, en particulier de l'azote liquide ou de la vapeur de l'azote liquide.

5. Procédé selon l'une des revendications 1 à 3, dans lequel la température de protection d'accès est réglée avec un élément Peltier (23).

6. Procédé selon l'une des revendications précédentes, dans lequel la température du circuit de filtrage d'accès (10) est augmentée avec un dispositif de chauffage pour le passage en mode lecture-écriture.

7. Procédé selon l'une des revendications précédentes, dans lequel est utilisée comme circuit de filtrage d'accès une mémoire de données (10) ou une partie d'une mémoire de données.

8. Procédé selon l'une des revendications précédentes, dans lequel le circuit de filtrage d'accès constitue une partie du dispositif de traitement de données ou celui-ci.

9. Procédé selon l'une des revendications précédentes 7 ou 8, dans lequel la température de protection d'accès est réglée avec un dispositif de refroidissement (20) sur une partie de la mémoire de données (10).

10. Dispositif pour commander l'accès à un dispositif de traitement de données avec un circuit de filtrage d'accès (10), sachant que le circuit de filtrage d'accès (10) est conçu de façon à fonctionner avec accès autorisé à une température de fonctionnement normal en mode lecture-écriture et avec accès limité à une température de protection d'accès, qui est inférieure à la température de fonctionnement normal, **caractérisé en ce qu'**est prévu un dispositif de refroidissement (20), qui est conçu pour le réglage de la température de protection d'accès.

11. Dispositif selon la revendication 10, dans lequel le dispositif de refroidissement (20) comprend un bac de refroidissement (21) et/ou un élément Peltier (23).

12. Dispositif selon la revendication 10 ou 11, dans lequel est prévu sur le circuit de filtrage d'accès (10) un dispositif de chauffage (22).

13. Dispositif selon l'une des revendications précédentes 10 à 12, dans lequel le circuit de filtrage d'accès comprend une mémoire de données (10) ou une partie d'une mémoire de données (10).

14. Dispositif selon l'une des revendications précédentes 10 à 12, dans lequel le dispositif de traitement de données comprend une mémoire de données (10), sachant que le circuit de filtrage d'accès est constitué par la mémoire de données (10) ou une partie d'une mémoire de données (10).

15. Utilisation d'un dispositif selon la revendication 10 pour commander l'accès à un dispositif de traitement de données, en particulier lors de la conservation cryogénique d'échantillons biologiques.
